(19) Europäisches Patentamt
European Patent Office
Office européen des brevets

(11) **EP 2 644 554 A1**

## (12) EUROPEAN PATENT APPLICATION

(43) Date of publication:
**02.10.2013 Bulletin 2013/40**

(51) Int Cl.:
**B65H 63/06** (2006.01)  **G01B 11/10** (2006.01)

(21) Application number: **13160315.1**

(22) Date of filing: **21.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.03.2012 JP 2012074367**

(71) Applicant: **Murata Machinery, Ltd.**
**Kyoto-shi, Kyoto 601-8326 (JP)**

(72) Inventor: **Minamino, Katsushi**
**Kyoto 612-8686 (JP)**

(74) Representative: **Beck, Alexander**
**Hansmann & Vogeser**
**Patent- und Rechtsanwälte**
**Maximilianstrasse 4b**
**82319 Starnberg (DE)**

(54) **Yarn travelling information acquiring device, yarn processing device, and yarn travelling information acquiring method**

(57)    A yarn clearer (15) determines whether or not an abnormality is generated in a clearer head (49) in accordance with the drive voltage to be applied to the LED light sources. Since the drive voltage to be applied to the LED sources is associated with temporal change in a light emitting property of the LEDs (36, 37), by monitrong it and feedbacking it t the clearer head a more precise measurmenet is realized.

FIG. 3

Printed by Jouve, 75001 PARIS (FR)

EP 2 644 554 A1

**Description**

BACKGROUND OF THE INVENTION

1. Field of the Invention

The present invention relates to a yarn travelling information acquiring device and a yarn processing device.

2. Description of the Related Art

A yarn clearer for monitoring yarn quality serves as an example of a yarn travelling information acquiring device. For example, Japanese Unexamined Patent Publication No. 2008-7214 describes a yarn clearer arranged in a machine system including a plurality of spinning units and adapted to monitor yarn quality in each spinning unit, and a contamination detection method of a detection head of each yarn clearer. In a technique described in Japanese Unexamined Patent Publication No. 2008-7214, the contamination of the detection head is detected from yarn thickness data or the like obtained based on a yarn unevenness signal output from the yarn clearer of a certain spinning unit.

A sensor section (detecting section) of the yarn clearer includes a light emitting element (light emitting section) and a light receiving element (light receiving section), and a transparent window is arranged between the sensor section and the light emitting element (between the sensor section and a yarn path, and between the light emitting element and the yarn path). This window is arranged to prevent dusts and/or yarn wastes, for example, from entering into the sensor section. However, the window may get contaminated (dirty) if the dusts and/or the yarn wastes or the like attach to this transparent window. If the window gets contaminated, calculation of a travelling speed of the yarn and/or detection of a yarn defect may not be carried out. In the conventional technique described above, it is difficult to accurately detect an abnormality of the detecting section such as contamination of the window, and the like.

BRIEF SUMMARY OF THE INVENTION

An object of the present invention is to provide a yarn travelling information acquiring device and a yarn processing device capable of accurately detecting an abnormality of a detecting section.

A yarn travelling information acquiring device of the present invention includes a detecting section including a light emitting section adapted to emit light to a yarn path where a yarn travels, and a light receiving section adapted to receive the light emitted from the light emitting section, a correction processing section adapted to adjust a control value for emitting the light from the light emitting section in accordance with an amount of the light received by the light receiving section when the yarn is not present in the yarn path, a control value acquiring section adapted to acquire control value information indicating a control value of the light emitting section, and a determining section adapted to determine whether or not an abnormality is generated in the detecting section in accordance with the control value information acquired by the control value acquiring section.

According to the yarn travelling information acquiring device, the control value for emitting the light from the light emitting section is adjusted in accordance with the amount of the light received by the light receiving section when the yarn is not present in the yarn path. Light emitting properties of the light emitting section change with time. If a transparent window is arranged between the light emitting section and the light receiving section, the amount of the light received by the light receiving section decreases when the window becomes contaminated. Even in such a case, the control value is adjusted by the correction processing section such that the amount of the light received by the light receiving section is maintained constant. Further, a determination is made as to whether or not the abnormality is generated in the detecting section in accordance with the control value information. As described above, the control value information is associated with temporal change in the light emitting properties of the light emitting section and/or contamination of the window of the detecting section. Therefore, the abnormality of the detecting section can be accurately detected by such a determination processing.

The yarn travelling information acquiring device further includes a storage section adapted to store a prescribed value of the control value as a normal-time control value, wherein the determining section is adapted to determine whether or not an abnormality is generated in the light emitting section in accordance with a present control value and the normal-time control value of the light emitting section. According to such a configuration, since a determination is made as to whether or not the abnormality is generated in the detecting section (the light emitting section) in accordance with the normal-time control value, the abnormality of the detecting section (the light emitting section) can be more accurately detected.

The normal-time control value is a value between an initial control value of the light emitting section and a lifetime control value relating to a lifetime of the light emitting section. According to such a configuration, the normal-time control value can be appropriately determined between the initial control value and the lifetime control value, and a determination level of abnormality can be appropriately set. For example, the determination level of abnormality can be set according to a usage purpose of the yarn travelling information acquiring device and/or a type of a yarn, thus enhancing versatility of the yarn travelling information acquiring device.

The normal-time control value is an initial control value of the light emitting section. In this case, the abnormality of the detecting section can be accurately detected even at an initial stage in which the yarn travelling information acquiring device is started to be used.

The normal-time control value is a control value at completion of cleaning of the detecting section. Since the contamination is removed at the completion of cleaning of the detecting section, according to such a configuration, the abnormality of the detecting section can be accurately detected.

The yarn travelling information acquiring device further includes an update processing section adapted to update the normal-time control value stored in the storage section. The light emitting section has a lifetime property. The lifetime property has a sufficiently long temporal element than a temporal property, but brightness of the light emitting section is gradually reduced. By updating the normal-time control value, the detection of abnormality that complies more with an actual condition in view of the lifetime property of the light emitting section can be carried out.

The light emitting section includes a first light emitting section and a second light emitting section, and the determining section is adapted to determine whether or not an abnormality is generated in the detecting section in accordance with a difference between the control value and the normal-time control value in the first light emitting section and a difference between the control value and the normal-time control value in the second light emitting section. According to such a configuration, the abnormality can be accurately detected even in the detecting section including a plurality of light emitting sections.

The determining section is adapted to determine whether or not the light emitting section has reached a lifetime in accordance with a difference between a present control value of the light emitting section and an initial control value of the light emitting section. According to such a configuration, detection can be accurately made that the light emitting section has reached the lifetime.

The determining section is adapted to determine whether or not the light emitting section has reached a lifetime in accordance with a difference between a present control value of the light emitting section and a lifetime control value relating to a lifetime of the light emitting section. According to such a configuration, detection can be accurately made that the light emitting section has reached the lifetime.

The yarn travelling information acquiring device further includes a notification section adapted to notify generation of an abnormality in the detecting section when the determining section determines that the abnormality is generated in the detecting section. According to such a configuration, for example, the abnormality can be immediately notified to an operator.

A yarn processing device includes the yarn travelling information acquiring device described above, a yarn processing section adapted to execute a processing with respect to the yarn, and a control section adapted to control the processing executed by the yarn processing section in accordance with the travelling information of the yarn acquired by the yarn travelling information acquiring device. According to the yarn processing device, the yarn processing section can be controlled using accurate travelling information of the yarn acquired by the yarn travelling information acquiring device.

According to the present invention, the abnormality of the detecting section can be accurately detected.

BRIEF DESCRIPTION OF THE DRAWINGS

FIG. 1 is a side view of a winder unit;
FIG. 2 is a front view of the winder unit;
FIG. 3 is a block diagram illustrating a configuration of a clearer according to one embodiment;
FIG. 4 is a flowchart illustrating a processing procedure of a contamination determination processing in an analyzer;
FIGS. 5A to 5D are views illustrating each condition included in a conditional equation of contamination;
FIG. 6 is a view illustrating a conditional equation of contamination;
FIGS. 7A and 7B are views illustrating temporal change in brightness of a light emitting section;
FIGS. 8A and 8B are views illustrating temporal change in drive voltage of the light emitting section;
FIGS. 9A and 9B are views illustrating another example of the conditional equation of contamination;
FIG. 10 is a flowchart illustrating a processing procedure of a lifetime determination processing in the analyzer;
FIG. 11 is a block diagram illustrating a configuration of a clearer according to another embodiment; and
FIGS. 12A and 12B are views illustrating another further example of the conditional equation of contamination.

DETAILED DESCRIPTION OF PREFERRED EMBODIMENTS

Preferred embodiments of the present invention will be described below with reference to the drawings.

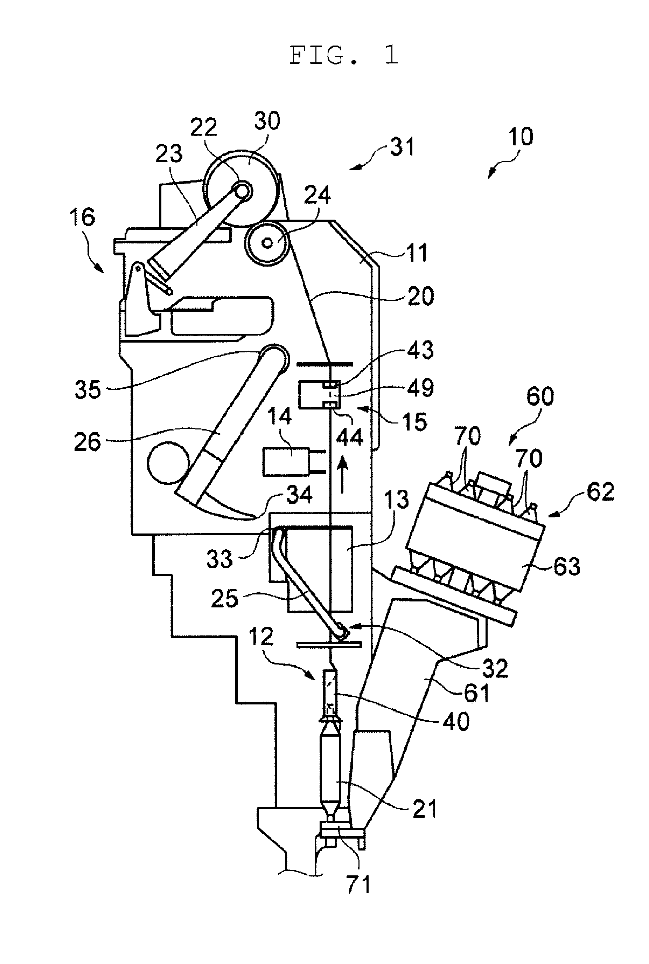

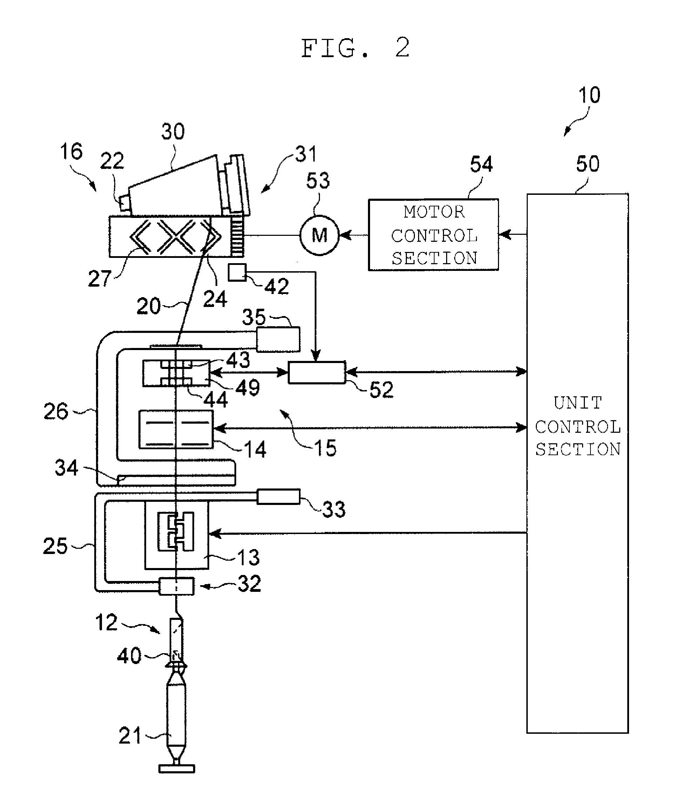

A winder unit 10 illustrated in FIGS. 1 and 2 unwinds a spun yarn 20 from a yarn supplying bobbin 21 and winds the spun yarn 20 around a winding bobbin 22 while traversing the spun yarn 20 to form a package 30 of a prescribed length and a prescribed form. An automatic winder (yarn winding machine, yarn processing device) of the present embodiment includes a plurality of winder units 10 arranged in a line, and a machine control device (not illustrated) arranged at one end in a direction in which the winder units 10 are arranged.

Each of the winder units 10 includes a unit frame 11 (FIG. 1) arranged on a left or right side in front view, and a winding unit main body 16 arranged at a side of the unit frame 11. The winding unit main body 16 includes a magazine-type supplying device 60, a winding section 31, and a supplying bobbin holding section 71.

As illustrated in FIG. 1, the magazine-type supplying device 60 includes a magazine holding section 61, which extends obliquely upward from a lower part of the winder unit 10 at a front side of the winder unit 10, and a bobbin accommodating device 62, which is attached to a distal end of the magazine holding section 61. The bobbin accommodating device 62 includes a magazine can 63. The magazine can 63 is formed with a plurality of accommodation holes to which a supply bobbin 70 can be set. The magazine can 63 can be intermittently driven, rotated, and fed by a motor (not illustrated), and the magazine can 63 can drop the supply bobbin 70 one at a time to a bobbin supply path (not illustrated) of the magazine holding section 61 by the intermittent drive and a control valve (not illustrated) of the magazine can 63. The supply bobbin 70 is introduced to a supplying bobbin holding section 71.

In place of the magazine-type supplying device 60 illustrated in FIG. 1, a transport conveyor (not illustrated) arranged at a lower part of the automatic winder may be used to supply the yarn supplying bobbin 21 from a yarn supplying bobbin supplying section (not illustrated) to the supplying bobbin holding section 71 of each winder unit 10.

The winding section 31 winds the spun yarn 20, which has been unwound from the yarn supplying bobbin 21, around the winding bobbin 22 to form the package 30. Specifically, the winding section 31 includes a cradle 23, which is configured to be able to grip the winding bobbin 22, and a winding drum 24, which is adapted to traverse the spun yarn 20 and to drive the winding bobbin 22. The cradle 23 can swing in a direction of approaching or separating with respect to the winding drum 24. The package 30 is thus brought into contact with or separated from the winding drum 24. As illustrated in FIG. 2, a spiral-shaped traverse groove 27 is formed on an outer peripheral surface of the winding drum 24, and the spun yarn 20 is traversed by the traverse groove 27.

The winding bobbin 22 is rotated by driving and rotating the winding drum 24 arranged facing the winding bobbin 22. The spun yarn 20 is wound around the rotating winding bobbin 22 while being traversed by the traverse groove 27. As illustrated in FIG. 2, the winding drum 24 is coupled to an output shaft of a drum drive motor 53. An operation of the drum drive motor 53 is controlled by a motor control section 54. The motor control section 54 performs control to operate and stop the drum drive motor 53 in response to a control signal from a unit control section (control section) 50.

A rotation sensor 42 is attached to the winding drum 24. The rotation sensor 42 is electrically connected to an analyzer 52 or the like arranged in a clearer 15, to be described later. The rotation sensor 42 is configured as a rotary encoder, for example, and transmits a pulse signal to the analyzer 52 every time the winding drum 24 rotates by a prescribed angle. The pulse signal output by the rotation sensor 42 is referred to as a rotation pulse signal.

The winding unit main body 16 has a structure in which an unwinding assisting device 12, a tension applying device 13, a yarn joining device 14, and a clearer head (detecting section) 49 of the clearer (yarn travelling information acquiring device) 15 are arranged in this order from the yarn supplying bobbin 21 side on a yarn travelling path between the yarn supplying bobbin 21 and the winding drum 24. The yarn processing section is at least one of the magazine-type supplying device 60, the winding section 31, the unwinding assisting device 12, the tension applying device 13, and the yarn joining device 14, for example.

The unwinding assisting device 12 assists the unwinding of the spun yarn 20 from the yarn supplying bobbin 21 by lowering a regulating member 40 covering a core tube of the yarn supplying bobbin 21 accompanying unwinding of the spun yarn 20 from the yarn supplying bobbin 21. The regulating member 40 makes contact with a balloon that is formed at an upper part of the yarn supplying bobbin 21 when the spun yarn 20 unwound from the yarn supplying bobbin 21 is swung around, thus applying an appropriate tension to the balloon and assisting unwinding of the spun yarn 20.

The tension applying device 13 applies a prescribed tension on the travelling spun yarn 20. The tension applying device 13 applies constant tension to the spun yarn 20, thereby improving quality of the package 30.

The clearer 15 detects defects by detecting thickness unevenness of the spun yarn 20 by an appropriate sensor. Specifically, the clearer 15 includes the clearer head 49 and the analyzer 52 (FIG. 2). Two yarn unevenness detecting sensors 43 and 44 are arranged in the clearer head 49. The yarn defect such as slub can be detected by processing signals from the yarn unevenness detecting sensors 43 and 44 by the analyzer 52. A cutter (not illustrated) for immediately cutting the spun yarn 20 when the clearer 15 detects a yarn defect is arranged in proximity to the clearer head 49.

The clearer 15 may also function as a yarn travelling information acquiring device for acquiring travelling information of the spun yarn 20. The travelling information of the yarn is information indicating a state of the travelling spun yarn 20. The configuration of acquiring the travelling information of the spun yarn 20 by the clearer 15 will be described later.

The yarn joining device 14 joins a lower yarn from the yarn supplying bobbin 21 and an upper yarn from the package 30 after the clearer 15 detects a yarn defect and cuts the spun yarn 20, or after a yarn breakage during unwinding of the spun yarn 20 from the yarn supplying bobbin 21. The yarn joining device 14 may be a mechanical-type or a type that uses fluid such as compressed air.

A lower yarn guiding pipe 25 for catching and guiding the lower yarn from the yarn supplying bobbin 21, and an upper yarn guiding pipe 26 for catching and guiding the upper yarn from the package 30 are respectively arranged below and above the yarn joining device 14. A suction port 32 is formed at a tip end of the lower yarn guiding pipe 25. A suction mouth 34 is arranged at a tip end of the upper yarn guiding pipe 26. The lower yarn guiding pipe 25 and the upper yarn guiding pipe 26 are respectively connected to an appropriate negative pressure source (not illustrated), to provide a suction flow at the suction port 32 and the suction mouth 34.

At the time of yarn cut or yarn breakage, the suction port 32 of the lower yarn guiding pipe 25 catches the lower yarn at a position illustrated in FIGS. 1 and 2, and is then swung upward around a shaft 33 to guide the lower yarn to the yarn joining device 14. Almost at the same time, the upper yarn guiding pipe 26 is swung upward around a shaft 35 from the illustrated position to catch, by the suction mouth 34, the upper yarn unwound from the package 30 that is reversely rotated by the drum drive motor 53. Subsequently, the upper yarn guiding pipe 26 is swung downward around the shaft 35 to guide the upper yarn to the yarn joining device 14. The yarn joining device 14 then performs the yarn joining operation of the lower yarn and the upper yarn.

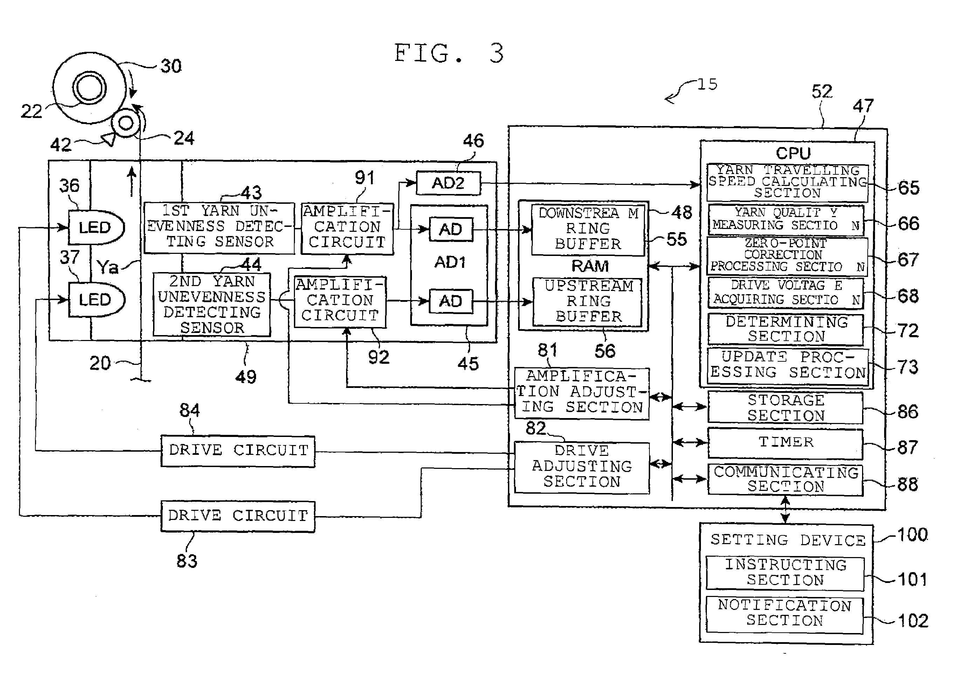

Next, the clearer 15 will be described in detail with reference to FIG. 3.

As illustrated in FIG. 3, the clearer head 49 includes the first yarn unevenness detecting sensor (light receiving section) 43 and the second yarn unevenness detecting sensor (light receiving section) 44, and two Analog-to-Digital (A/D) converters 45 and 46. The analyzer 52 is configured by hardware such as a Central Processing Unit (CPU) 47, a Random Access Memory (RAM) 48, and a Read Only Memory (ROM) (not illustrated), and software such as a program stored in the ROM. With the cooperative operation of the hardware and the software, the CPU 47 can function as a yarn travelling speed calculating section 65, a yarn quality measuring section 66, a zero-point correction processing section (correction processing section) 67, a drive voltage acquiring section (control value acquiring section) 68, a determining section 72, an update processing section 73, and the like. The pulse signals from the rotation sensor 42 are input to the analyzer 52.

The first yarn unevenness detecting sensor 43 and the second yarn unevenness detecting sensor 44 are arranged with an appropriate distance in-between in a yarn travelling direction. The first yarn unevenness detecting sensor 43 is arranged downstream and the second yarn unevenness detecting sensor 44 is arranged upstream. In the present embodiment, the yarn unevenness detecting sensors 43 and 44 are adapted to detect thickness unevenness of the spun yarn 20. Specifically, the yarn unevenness detecting sensors 43 and 44 are configured as optical sensors. Light Emitting Diodes (LEDs) 36 (first light emitting section) and 37 (second light emitting section) are arranged as light sources on an opposite side of the yarn unevenness detecting sensors 43 and 44 with a yarn path Ya of the spun yarn 20 therebetween. In other words, the yarn unevenness detecting sensor 43 is arranged to face the LED 36 with the yarn path Ya therebetween. The yarn unevenness detecting sensor 44 is arranged to face the LED 37 with the yarn path Ya therebetween. The yarn unevenness detecting sensors 43 and 44 respectively receive light irradiated from the LEDs 36 and 37, and detect a light receiving amount thereof. Since the light receiving amount of the yarn unevenness detecting sensors 43 and 44 changes when the thickness of the travelling spun yarn 20 changes, the clearer 15 can detect the thickness unevenness of the spun yarn 20. The output signals (yarn thickness unevenness signals) from the yarn unevenness detecting sensors 43 and 44 are converted from an analog value to a digital value (A/D converted), and then output to the analyzer 52.

The CPU 47 arranged in the analyzer 52 monitors the A/D converted yarn thickness unevenness signals to measure the quality of the spun yarn 20. For example, since the thickness of the spun yarn 20 is found to be abnormal at an area where the quality of the spun yarn 20 has a problem, the defect of the spun yarn 20 can be detected by detecting the abnormality in the thickness of the spun yarn 20 by the CPU 47. Since the quality of the spun yarn 20 is measured by the CPU 47, the CPU 47 thus can function as the yarn quality measuring section 66.

The yarn supplying bobbin 21 normally has a yarn spun by a ring spinning machine. Slight thickness unevenness may periodically occur in such a yarn. The cause of the periodic yarn thickness unevenness may include core shift of a draft roller that drafts a sliver in the ring spinning machine. The periodic thickness unevenness in a spinning process causes moire to be generated in a woven cloth in the subsequent weaving process. The CPU 47 serving as the yarn quality measuring section 66 performs a Fast Fourier Transform (FFT) calculation of the yarn thickness unevenness signal to detect the periodic thickness unevenness of the spun yarn 20. In order to accurately perform the FFT calculation, the number of waveform data per unit length of the spun yarn 20 is required to be accurately made constant when sampling the yarn thickness unevenness signal in the A/D converter.

The CPU 47 of the present embodiment acquires information relating to a travelling state of the spun yarn 20, and changes a sampling period (cycle) of the second A/D converter 46 according to the travelling state. Specifically, the CPU 47 generates a pulse signal each time the spun yarn 20 travels a specific length (e.g., 1 mm), and transmits the pulse signal to the second A/D converter 46. This pulse signal is referred to as a fixed yarn length pulse signal. In accordance with this fixed yarn length pulse signal, the second A/D converter 46 samples the analog signals coming from the first yarn unevenness detecting sensor 43 through a first amplification circuit 91, and converts the analog signals into digital signals. Accordingly, since the number of data per unit length of the spun yarn 20 can be accurately maintained constant, the FFT calculation can be accurately performed in the CPU 47 and the periodic thickness unevenness can be reliably detected. By accurately maintaining the number of data per unit length of the spun yarn 20 constant, the CPU 47 can accurately perform an evaluation of the length of the thickness unevenness of the spun yarn 20 even with a sporadic yarn defect without periodicity, and detection accuracy of the analyzer 52 can be improved. Since a fixed yarn length pulse signal is information relating to the travelling state of the spun yarn 20, the fixed yarn length pulse signal can be referred to as one type of yarn travelling information.

Next, the configuration for acquiring the fixed yarn length pulse signal will be described.

The clearer 15 of the present embodiment includes the first A/D converter 45 apart from the second A/D converter 46.

The first A/D converter 45 is an A/D converter which performs sampling of the yarn thickness unevenness signal in order to acquire the fixed yarn length pulse signal by the CPU 47. Specifically, the first A/D converter 45 samples the analog signals from the two yarn unevenness detecting sensors 43 and 44 through the first amplification circuit 91 and a second amplification circuit 92 respectively, and converts the analog signals to digital signals. The obtained digital signals are input to the analyzer 52. The CPU 47 arranged in the analyzer 52 functions as the yarn travelling speed calculating section 65 to detect the travelling speed of the spun yarn 20 using the input digital signals. Since the travelling speed of the spun yarn 20 is also information relating to the travelling state of the spun yarn 20, the travelling speed can be referred to as one type of yarn travelling information.

If the travelling speed of the spun yarn 20 is obtained, the travelled length of the spun yarn 20 within a prescribed period of time can be detected in accordance with the travelling speed. The CPU 47 generates and acquires the fixed yarn length pulse signal in accordance with the travelling speed of the spun yarn 20, and transmits the fixed yarn length pulse signal to the second A/D converter 46. Accordingly, the yarn thickness unevenness signal can be sampled for every fixed yarn length of the spun yarn 20 in the second A/D converter 46.

Next, a method of acquiring the travelling speed (yarn travelling information) of the spun yarn 20 by the clearer 15 will be described in detail.

First, in the first A/D converter 45, the analog waveforms output from the yarn unevenness detecting sensors 43 and 44 are sampled. A sampling frequency fs1 at this time is changed as needed in proportion to a rotation speed of the winding drum 24. Accordingly, when the signal waveforms of the yarn unevenness detecting sensors 43 and 44 are sampled by the first A/D converter 45, the number of data acquired per unit length of the spun yarn 20 thus can be maintained substantially constant. A calculation load of the CPU 47 thus can be reduced compared with when the sampling frequency is fixed.

As described above, the rotation sensor 42 outputs the rotation pulse signal every time the winding drum 24 rotates a prescribed angle. Therefore, the number of rotation pulse signals output per unit time is proportional to the rotation speed of the winding drum 24. The CPU 47 of the analyzer 52 acquires the rotational information of the winding drum 24 in accordance with the rotation pulse signal received from the rotation sensor 42. The rotational information of the winding drum 24 is information relating to the rotation speed of the winding drum 24, and may be, for example, a peripheral speed of the winding drum 24, an angular speed of the winding drum 24, or the number of rotation pulse signals output per unit time. That is, the information relating to the rotation speed of the winding drum 24 just needs to be acquired in some form in accordance with the rotation pulse signal.

The CPU 47 obtains the sampling frequency fs1 through a process of multiplying a prescribed coefficient to the rotational information of the winding drum 24 obtained in the above manner, and sets the obtained sampling frequency fs1 in the first A/D converter 45. The sampling frequency fs1 of the first A/D converter 45 may be changed as needed in proportion to the rotation speed of the winding drum 24.

In order to temporarily carry the waveform data input from the first A/D converter 45, the analyzer 52 has a storage range configured as a ring buffer (downstream ring buffer 55 and upstream ring buffer 56) on the RAM 48. Specifically, data obtained by sampling the output signal (first yarn thickness unevenness signal) from the first yarn unevenness detecting sensor 43 is accumulated in the downstream ring buffer 55. The data obtained by sampling the output signal (second yarn thickness unevenness signal) from the second yarn unevenness detecting sensor 44 is accumulated in the upstream ring buffer 56. Although the size of the downstream ring buffer 55 and the upstream ring buffer 56 is not particularly limited, the downstream ring buffer 55 and the upstream ring buffer 56 can respectively carry 128 pieces of data in the present embodiment.

The clearer 15 according to the present embodiment has a function of detecting the abnormality of the clearer head 49. As illustrated in FIG. 3, the clearer head 49 includes the first amplification circuit 91 and the second amplification circuit 92. The first amplification circuit 91 is arranged between the first yarn unevenness detecting sensor 43 and the A/D converters 45 and 46, and is adapted to amplify the analog signal from the first yarn unevenness detecting sensor 43. The second amplification circuit 92 is arranged between the second yarn unevenness detecting sensor 44 and the A/D converter 45, and is adapted to amplify the analog signal from the second yarn unevenness detecting sensor 44. The analyzer 52 includes an amplification adjusting section 81 adapted to adjust a gain in the first amplification circuit 91 and a gain in the second amplification circuit 92. The analyzer 52 includes a drive adjusting section 82 adapted to adjust a drive voltage to be applied to the LEDs 36 and 37 by controlling drive circuits 83 and 84. The drive voltage to be applied to the LEDs 36 and 37 is a control value for emitting light from the LEDs 36 and 37. When the drive voltage to be applied to the LEDs 36 and 37 changes, the current flowing through the LEDs 36 and 37 changes. The luminance of the LEDs 36 and 37 is adjusted by the change of current.

The analyzer 52 includes a storage section 86 adapted to store various voltage values for the LEDs 36 and 37, such as an initial drive level (initial control value), a normal-time level (normal-time control value), an abnormality level (abnormality-time control value), and a lifetime level (lifetime control value). The analyzer 52 includes a timer 87 adapted to measure time, and a communicating section 88 adapted to perform communication with a setting device 100. The setting device 100 includes an instructing section 101 and corresponds to the above-described machine control device, but the setting device 100 may be incorporated in the analyzer 52.

The CPU 47 of the analyzer 52 has each of the following functions. Specifically, the CPU 47 functions as the yarn travelling speed calculating section 65 and detects the travelling speed of the spun yarn 20. The CPU 47 functions as the yarn quality measuring section 66 and measures the quality of the spun yarn 20. The CPU 47 functions as the zero-point correction processing section 67, and outputs a signal that instructs adjustment of the drive voltage to the drive adjusting section 82 to perform the zero-point correction processing of each of the LEDs 36 and 37. This zero-point correction is the processing of adjusting the drive voltage to be applied to the LEDs 36 and 37 such that a voltage related to the detection signal of when nothing is arranged in the yarn path Ya becomes a prescribed voltage. According to the zero-point correction processing, the light receiving amount of the yarn unevenness detecting sensors 43 and/or 44 is maintained constant. The CPU 47 functions as the drive voltage acquiring section 68, and acquires information indicating the drive voltage of each of LEDs 36 and 37 from the drive adjusting section 82, and outputs the acquired information to the storage section 86. The CPU 47 functions as the determining section 72, and determines whether or not an abnormality is generated in the clearer head 49, and detects whether or not the LEDs 36 and 37 reached their lifetime. The CPU 47 functions as the update processing section 73, and updates the normal-time voltage, which is the voltage value stored in the storage section 86.

The abnormality of the clearer head 49 detected by the analyzer 52 includes, for example, contamination of the clearer head 49, and degradation (i.e. , lifetime) of the LED 36 and/or the LED 37. The clearer head 49 may include a transparent window (not illustrated) between the LEDs 36 and 37, and the yarn unevenness detecting sensors 43 and 44. The clearer head 49 gets contaminated when dust and/or yarn wastes attach to the window.

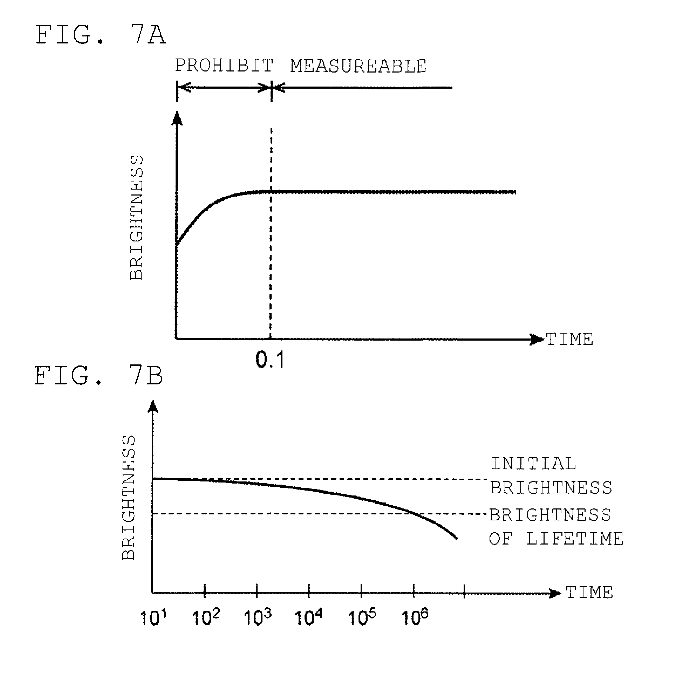

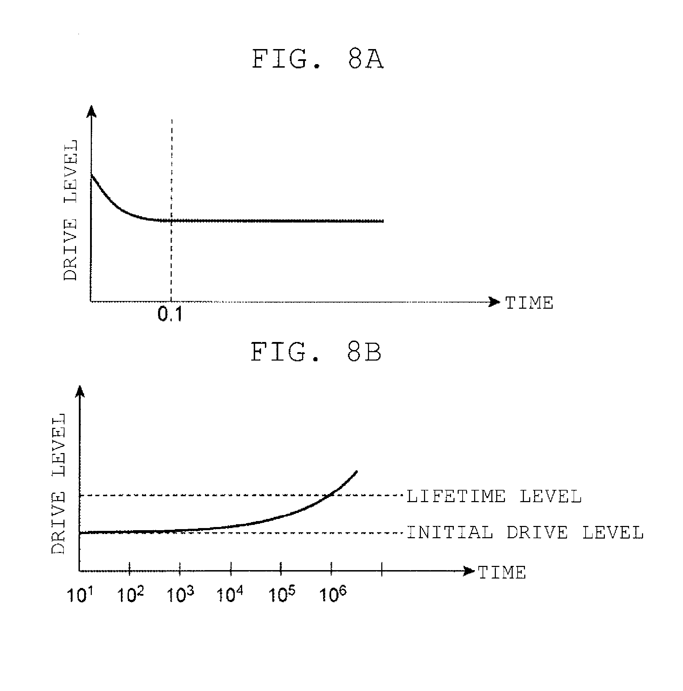

The normal-time level stored in the storage section 86 is a value appropriately set between the initial drive voltage and the lifetime drive voltage illustrated in FIG. 8B. The LEDs 36 and 37 have temporal properties of brightness illustrated in FIG. 7A. In the present embodiment, the brightness is not stable for about 0.1 hours from the start of light emission of the LED 36 and/or 37, and thus the drive level is also not stable (see FIGS. 7A and 8A). The CPU 47 thus prohibits the storing of the normal-time level to the storage section 86 until elapse of the time in which the drive level stabilizes. The CPU 47 stores the normal-time level in the storage section 86 after elapse of the time in which the drive level stabilizes.

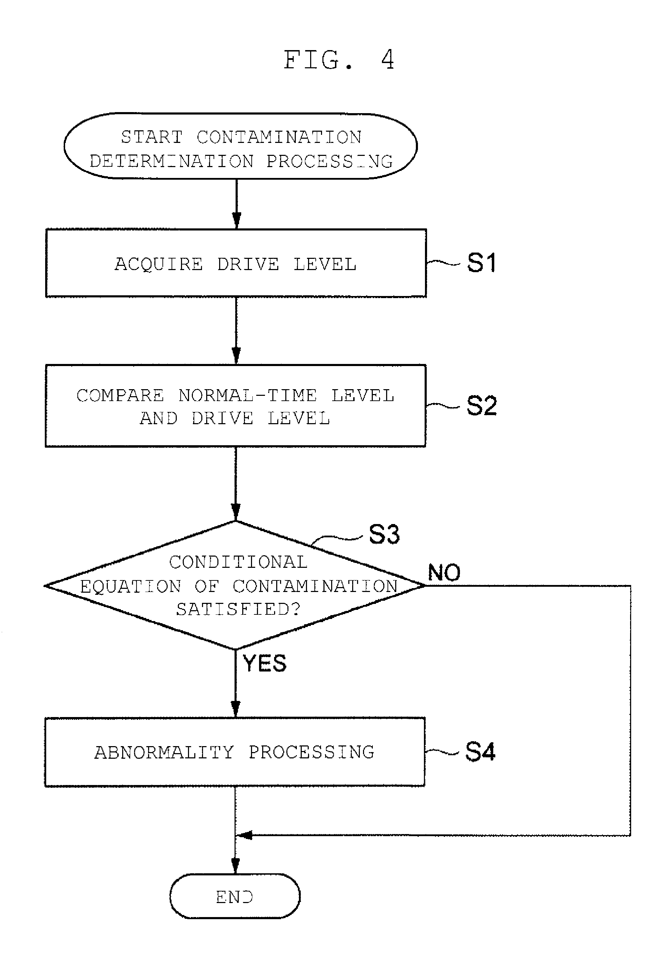

Hereinafter, the processing executed by the CPU 47 of the analyzer 52 will be described. The CPU 47 executes a contamination determination processing and a lifetime determination processing. FIG. 4 is a flowchart illustrating a processing procedure of the contamination determination processing in the analyzer 52. The CPU 47 first performs the zero- point correction processing prior to the contamination determination processing. The CPU 47 then acquires the drive level (control value information) of the LEDs 36 and 37 (step S1) . In step S1, the CPU 47 acquires the information indicating the drive voltage of each of the LEDs 36 and 37 from the drive adjusting section 82, and outputs the acquired information to the storage section 86. The storage section 86 sequentially stores the information output from the CPU 47.

The CPU 47 then calculates a difference between the normal-time level (normal-time voltage) and the present drive level (step S2). Provided that the present drive levels of the LEDs 36 and 37 are respectively $V_A$ and $V_B$, and the normal-time levels of the LEDs 36 and 37 are respectively $V_{A0}$ and $V_{B0}$, the CPU 47 calculates the difference $D_A = |V_A-V_{A0}|$ and $D_B = |V_B-V_{B0}|$ between the normal-time level and the present drive level in each of the LEDs 36 and 37. The CPU 47 then determines whether or not the differences $D_A$ and $D_B$ satisfy any one of the following conditional equations of contamination (1) to (4) (step S3).

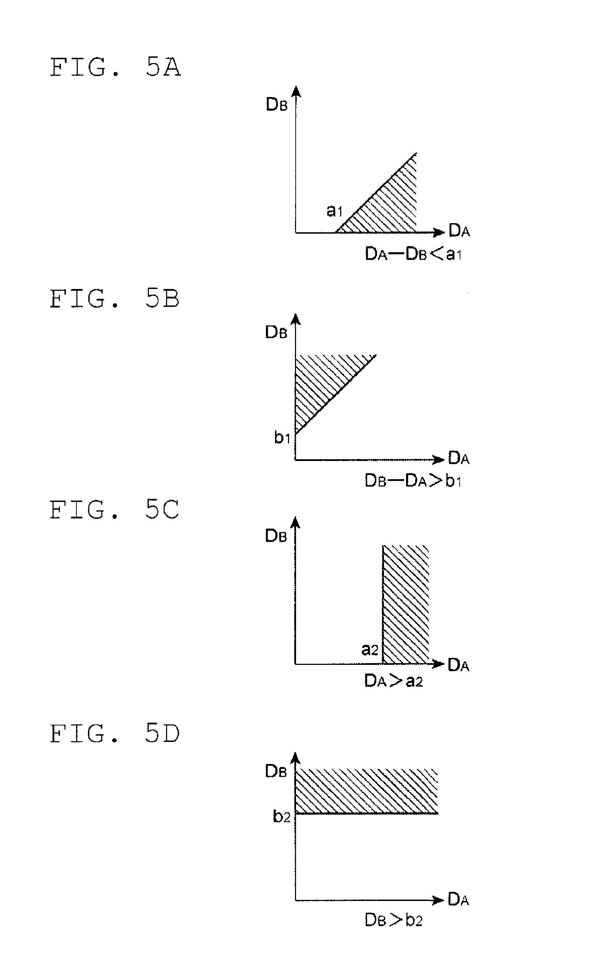

$$D_A - D_B < a_1 \ldots (1) \text{ (see FIG. 5A)}$$

$$D_B - D_A > b_1 \ldots (2) \text{ (see FIG. 5B)}$$

$$D_A > a_2 \ldots (3) \text{ (see FIG. 5C)}$$

$$D_B > b_2 \ldots (4) \text{ (see FIG. 5D)}$$

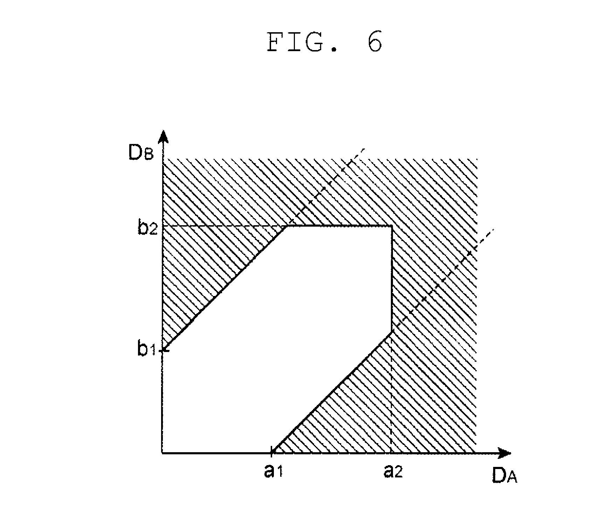

By overlapping the four conditional equations (1), (2), (3), and (4), a region illustrated in FIG. 6 is obtained as the conditional equation of contamination. Among the region illustrated in FIG. 6, the white region without shaded lines is the region in which the clearer head 49 is determined to be under the normal state, and the region with the shaded lines is the region in which the clearer head 49 is determined to be under the abnormal state.

Next, if a determination is made that the above conditional equation of contamination is satisfied, the CPU 47 performs the abnormality processing (step S4). An example of the abnormality processing includes various processing such as (i) notifying that the abnormality is generated by an alarm lamp (not illustrated) or the like provided on a notification section 102, and (ii) blowing air to a yarn travelling space of the clearer 15 (so- called blast processing). The notification of abnormality by the alarm lamp can be executed with the notification section 102 by the communication of the communicating section 88 and the setting device 100. For the blast processing, in preparation for when foreign substances and/or dust and the like accumulate in the yarn travelling space, the clearer 15 includes an air blowing mechanism (not illustrated) adapted to blow air to blow away accumulated substances.

The CPU 47 then terminates the contamination determination processing. Provided that a normal-time level is $V_C$ and an abnormality level is $V_{TH}$, if a determination is made that the conditional equation of contamination $|V_0 - V_A| > V_{TH}$ is not satisfied in step S3, the CPU 47 terminates the contamination determination processing without notifying the abnormality.

According to the clearer 15 of the present embodiment described above, the drive voltage to be applied to the LEDs 36 and 37 is adjusted by the zero-point correction processing section 67 in accordance with the light receiving amount of the yarn unevenness detecting sensors 43 and 44 in a state where the yarn 20 is not arranged on the yarn path Ya. As illustrated in FIG. 7B, the light emitting properties of the LEDs 36 and 37 change by time. If a transparent window is arranged between the LEDs 36 and 37 and the yarn unevenness detecting sensor 43 and/or 44, the light receiving amount of the yarn unevenness detecting sensor 43 and/or 44 decreases when the window becomes contaminated. Even when the transparent window is contaminated, the drive voltage is adjusted by the zero-point correction processing section 67 such that the light receiving amount of the yarn unevenness detecting sensor 43 and/or 44 is maintained constant. Furthermore, a determination is made as to whether or not the abnormality is generated in the clearer head 49 in accordance with the drive voltage information. The drive voltage information is associated with the temporal change of the light emitting properties of the LEDs 36 and 37 and/or the contamination of the window of the clearer head 49, and the like. Therefore, the abnormality of the clearer head 49 can be accurately detected by such a determination processing.

Since a determination as to whether or not an abnormality is generated in the clearer head 49 is made in accordance with the normal-time voltage, the abnormality of the clearer head 49 can be more accurately detected.

The normal-time voltage $V_{A0}$ and $V_{B0}$ can be appropriately determined between the initial drive voltage and the lifetime drive voltage, and the determination level of abnormality can be appropriately set. For example, the determination level of abnormality can be set according to the usage purpose of the clearer 15 and/or the type of spun yarn 20, thus enhancing the versatility of the clearer 15.

The determining section 72 determines whether or not an abnormality is generated in the clearer head 49 in accordance with the difference $D_A = |V_A - V_{A0}|$ between the drive voltage and the normal- time voltage in the LED 36, and the difference $D_B = |V_B - V_{B0}|$ between the drive voltage and the normal- time voltage in the LED 37. The abnormality can be accurately detected even in the clearer head 49 including a plurality of LEDs 36 and 37.

The automatic winder includes the notification section 102 for notifying the abnormality when the determining section 72 determines that the abnormality is generated in the clearer head 49. The abnormality thus can be immediately notified to the operator or the like.

The conditional equation of contamination is not limited to the equations (1) to (4) above. For example, one of the equations (1), (2), and (5) may be satisfied.

$$D_A - D_B < a_1 \ldots (1) \ (\text{see FIG. 5A})$$

$$D_B - D_A > b_1 \ldots (2) \ (\text{see FIG. 5B})$$

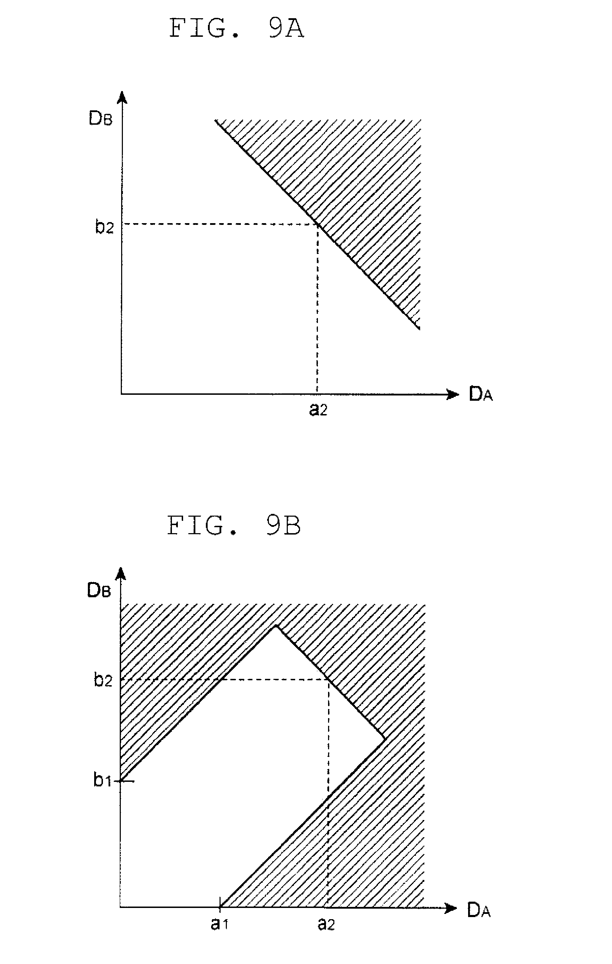

$$D_A + D_B > a_2 + b_2 \ldots (5) \ (\text{see FIG. 9A})$$

By overlapping the three conditional equations (1), (2), and (5), a region illustrated in FIG. 9B is obtained as the conditional equation of contamination. If the LED 36 and the LED 37 are elements having the same property (e.g., temperature property and/or lifetime property) or elements of the same type, $a_1$ and $b_1$ are the same, and $a_2$ and $b_2$ are the same.

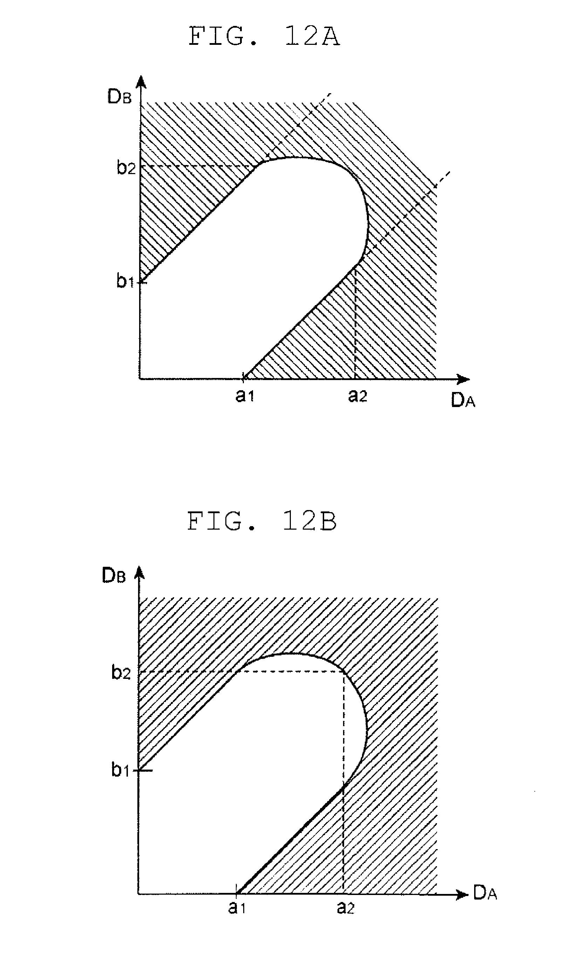

The conditional equation of contamination may be the region in which the end of the region illustrated in FIG. 6 is formed into an arcuate shape, as illustrated in FIG. 12A, or may be the region in which the end of the region illustrated in FIG. 9B is formed into an arcuate shape, as illustrated in FIG. 12B.

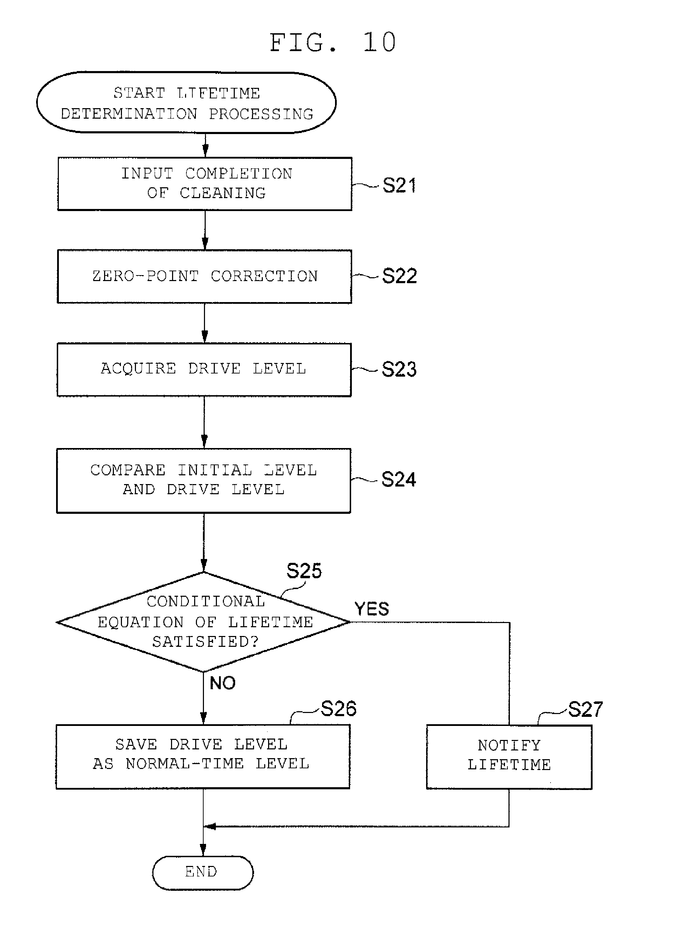

FIG. 10 is a flowchart illustrating a processing procedure of the lifetime determination processing in the analyzer 52. First, the input of completion of cleaning is made by the operator to the clearer 15 (step S21). The processing performed in step S21 may be (i) an input operation from a button (not illustrated) arranged on the clearer 15 by the operator, or may be (ii) an automatic detection of completion of cleaning by the analyzer 52. When automatically detecting the completion of cleaning, if the cleaning is performed with the LEDs 36 and 37 shielded by the cleaning member, a darker value is detected compared to when the LEDs 36 and 37 are shielded by the spun yarn 20. Therefore, if the detection time of such a dark value is long, the CPU 47 can determine the completion of the cleaning by detecting the end of the detection time.

The CPU 47 then performs the zero-point correction (step S22). The CPU 47 then acquires the drive level (drive voltage information) of the LEDs 36 and 37 (step S23). In step S23, the CPU 47 acquires the information indicating the drive voltage of each of the LEDs 36 and 37 from the drive adjusting section 82, and outputs the acquired information to the storage section 86. The storage section 86 sequentially stores the information output from the CPU 47.

The CPU 47 then compares the initial level and the drive level (step S24). Provided that the present drive levels of the LEDs 36 and 37 are $V_A$ and $V_B$, and the initial levels of the LEDs 36 and 37 are $V_{ZA}$ and $V_{ZB}$, the CPU 47 calculates the differences $|V_{ZA}-V_A|$ and $|V_{ZB}-V_B|$ between the initial level and the drive level in each of the LEDs 36 and 37. The CPU 47 determines whether or not the differences $|V_{ZA}-V_A|$ and $|V_{ZB}-V_B|$ satisfy at least one of the following conditional equations of lifetime (6) and (7) (step S25).

$$\left| V_{ZA} - V_A \right| > V_{LA} \ldots (6)$$

$$\left| V_{ZB} - V_B \right| > V_{LB} \ldots (7)$$

The initial levels $V_{ZA}$ and $V_{ZB}$ can be stored in advance in the storage section 86 at the time of manufacturing of the automatic winder, at the time of shipment of the automatic winder, at the time of installation of the automatic winder in a spinning factory, at the time before the start of winding of the package 30 by the automatic winder, or the like. $V_{LA}$ and $V_{LB}$ are lifetime drive voltages. If the LED 36 and the LED 37 are elements having the same property (e.g., temperature property and/or lifetime property) or elements of the same type, $V_{LA}$ and $V_{LB}$ may be the same.

Next, if a determination is made that at least one of the conditional equations of lifetime (6) and (7) is satisfied, the CPU 47 saves the present drive level in the storage section 86 as the normal-time level (step S26). The processing of step S26 corresponds to the update processing of the normal-time level by the update processing section 73. The CPU 47 then terminates the lifetime determination processing.

If a determination is made that both conditional equations of lifetime (6) and (7) are not satisfied, the CPU 47 performs lifetime notification (step S27). Specifically, the CPU 47 transmits to the notification section 102 by communication between the communicating section 88 and the setting device 100 that the LED 36 or the LED 37 has reached the lifetime, and the notification section 102 notifies that the LED 36 or the LED 37 has reached the lifetime. The CPU 47 then terminates the lifetime determination processing. Even if a determination is made that the conditional equations of lifetime (6) and (7) are not satisfied, the CPU 47 may perform the contamination notification without performing the lifetime notification for a prescribed number of times (permitted number of times). Thus, even if the cleaning of the clearer 15 is not sufficient, the contamination notification can be immediately made without performing the lifetime notification, thus urging the operator or the like to perform the cleaning.

According to the above lifetime determination processing, the normal-time voltage stored in the storage section 86 is updated by the update processing section 73. The LEDs 36 and 37 have lifetime properties illustrated in FIG. 7B. The lifetime property has a sufficiently long temporal element than the temporal property, but the brightness of the LEDs 36 and 37 gradually decreases. By updating the normal-time voltage stored in the storage section 86 by the update processing section 73, the clearer 15 can detect the abnormality that complies more with the actual condition in view of the lifetime properties of the LEDs 36 and 37.

The determining section 72 determines whether or not the LED 36 and/or 37 has reached the lifetime in accordance with the difference $|V_{ZA}-V_A|$ and/or $|V_{ZB}-V_B|$ between the present drive voltage of the LED 36 and/or 37 and the initial drive voltage of the LED 36 and/or 37. According to such a configuration, a detection can be accurately carried out as to whether the LED 36 and/or 37 has reached the lifetime.

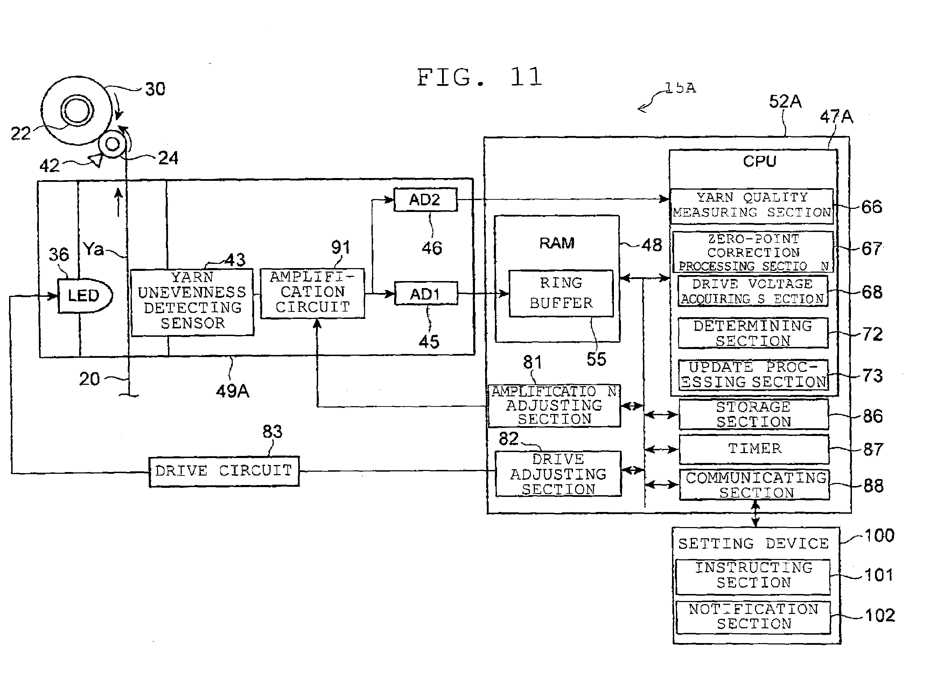

FIG. 11 is a block diagram illustrating a configuration of a clearer 15A according to another embodiment. The clearer 15A illustrated in FIG. 11 differs from the clearer 15 illustrated in FIG. 3 the clearer 1A includes a clearer head 49A (analyzer 52A) including a single LED 36. Accompanied therewith, a CPU 47A of the clearer 15A does not include the yarn travelling speed calculating section 65. The clearer 15A does not include the drive circuit 84, the second yarn unevenness detecting sensor 44, the second amplification circuit 92, and the upstream ring buffer 56.

The processing similar to the above embodiment can be performed in the clearer 15A including one LED 36, which is the light source. The contamination determination processing by the clearer 15A differs from the contamination determination processing by the clearer 15 in that, in steps S2 and S3 illustrated in FIG. 4, the CPU 47A compares the normal-time level (normal-time voltage) and the present drive level. That is, provided that the present drive level is $V_A$ and the normal-time level is $V_0$, the CPU 47A calculates the difference $|V_0-V_A|$ between the normal-time level and the present drive level. The CPU 47A then determines whether the conditional equation of contamination $|V_0-V_A| > V_{TH}$ is satisfied when the abnormality level is $V_{TH}$ (step S3). If a determination is made that the conditional equation of contamination $|V_0-V_A| > V_{TH}$ is satisfied, the CPU 47A performs the abnormality processing (step S4). The abnormality of the LED 36 can also be accurately detected by the clearer 15A.

The embodiments of the present invention have been described above, but the present invention is not limited to the above embodiments. For example, the normal-time voltage may be the initial drive voltage of the light emitting section, or may be the drive voltage at completion of the cleaning of the detecting section (including window or the like) or the cleaning of at least one of the light emitting section and the light receiving section. In the lifetime determination processing, a determination may be made as to whether or not the light emitting section has reached the lifetime in accordance with the difference between the present drive voltage of the light emitting section and the lifetime drive voltage related to the lifetime of the light emitting section. The embodiments described above are not limited to a case of having the drive voltage as the control value, and the current to be supplied to the light emitting section may be adopted as the control value.

The embodiments described above are not limited to a case in which the notification section 102 is arranged in the setting device 100, and a notification lamp such as an LED may be arranged in the clearer 15 as the notification section. The setting device 100 may be arranged in each winder unit other than the machine control device, and may be arranged for every group configured by a prescribed number of winder units.

The embodiments of the present invention are not limited to the embodiments of outputting, from the drive voltage acquiring section 68 to the storage section 86, the information indicating the drive voltage acquired by the CPU 47 (the drive voltage acquiring section 68) from the drive adjusting section 82. The information indicating the drive voltage output by the CPU 47 to the drive adjusting section 82 may be stored as it is in the storage section 86 without being once acquired from the drive adjusting section 82 by the CPU 47 (the drive voltage acquiring section 68).

The clearer 15 (the yarn travelling information acquiring device) of the present invention is not limited to being provided in the automatic winder, and may be provided in other yarn processing devices such as a fine spinning machine, which includes an air-jet spinning device (yarn processing section), for example.

**Claims**

1. A yarn travelling information acquiring device comprising:

a detecting section (49; 49A) including a light emitting section (36, 37) adapted to emit light to a yarn path (Ya) where a yarn (20) travels, and a light receiving section (43, 44) adapted to receive the light emitted from the light emitting section (36, 37), **characterized by**

a correction processing section (67) adapted to adjust a control value for emitting the light from the light emitting section (36, 37) in accordance with an amount of the light received by the light receiving section (43, 44) when the yarn (20) is not present in the yarn path (Ya),

a control value acquiring section (68) adapted to acquire control value information indicating a control value of the light emitting section (36, 37), and

a determining section (72) adapted to determine whether or not an abnormality is generated in the detecting section (49; 49A) in accordance with the control value information acquired by the control value acquiring section (68).

2. The yarn travelling information acquiring device according to claim 1, **characterized by** a storage section (86) adapted to store a prescribed value of the control value as a normal-time control value,

   wherein the determining section (72) is adapted to determine whether or not an abnormality is generated in the light emitting section (36, 37) in accordance with a present control value and the normal-time control value of the light emitting section (36, 37).

3. The yarn travelling information acquiring device according to claim 2, **characterized in that** the normal-time control value is a value between an initial control value of the light emitting section (36, 37) and a lifetime control value relating to a lifetime of the light emitting section (36, 37).

4. The yarn travelling information acquiring device according to claim 2, **characterized in that** the normal-time control value is an initial control value of the light emitting section (36, 37).

5. The yarn travelling information acquiring device according to claim 2 or claim 3, **characterized in that** the normal-time control value is a control value at completion of cleaning of the detecting section (49; 49A).

6. The yarn travelling information acquiring device according to any one of claim 2 through claim 5, **characterized by** an update processing section (73) adapted to update the normal-time control value stored in the storage section (86).

7. The yarn travelling information acquiring device according to any one of claim 2 through claim 5, **characterized in that** the light emitting section includes a first light emitting section (36) and a second light emitting section (37), and the determining section (72) is adapted to determine whether or not an abnormality is generated in the detecting section (49, 49A) in accordance with a difference between the control value and the normal-time control value in the first light emitting section (36) and a difference between the control value and the normal-time control value in the second light emitting section (37).

8. The yarn travelling information acquiring device according to any one of claim 1 through claim 7, **characterized in that** the determining section (72) is adapted to determine whether or not the light emitting section (36, 37) has reached a lifetime in accordance with a difference between a present control value of the light emitting section (36, 37) and an initial control value of the light emitting section (36, 37).

9. The yarn travelling information acquiring device according to any one of claim 1 through claim 7, **characterized in that** the determining section (72) is adapted to determine whether or not the light emitting section (36, 37) has reached a lifetime in accordance with a difference between a present control value of the light emitting section (36, 37) and a lifetime control value relating to a lifetime of the light emitting section (36, 37).

10. The yarn travelling information acquiring device according to any one of claim 1 through claim 9, **characterized by** a notification section (102) adapted to notify generation of an abnormality in the detecting section (49; 49A) when the determining section (72) determines that the abnormality is generating in the detecting section (49; 49A).

11. A yarn processing device **characterized by** :

    the yarn travelling information acquiring device (15) according to any one of claim 1 through claim 10, a yarn processing section (12, 13, 14, 60) adapted to execute a processing with respect to the yarn (20), and a control section (50) adapted to control the processing executed by the yarn processing section (12, 13, 14, 60) in accordance with travelling information of the yarn (20) acquired by the yarn travelling information acquiring device (15).
Proposed additional method claims

**12.** A yarn travelling information acquiring method with the following steps:

using a detecting section (49; 49A) including a light emitting section (36, 37) emitting light to a yarn path (Ya) where a yarn (20) travels, and a light receiving section (43, 44) receiving the light emitted from the light emitting section (36, 37), **characterized by**
adjusting a control value for emitting the light from the light emitting section (36, 37) in accordance with an amount of the light received by the light receiving section (43, 44) when the yarn (20) is not present in the yarn path (Ya),
acquiring control value information indicating a control value of the light emitting section (36, 37), and
determining whether or not an abnormality is generated in the detecting section (49; 49A) in accordance with the control value information acquired.

**13.** The yarn travelling information acquiring method according to claim 12, **characterized by** storing a prescribed value of the control value as a normal-time control value, and
determining whether or not an abnormality is generated in the light emitting section (36, 37) in accordance with a present control value and the normal-time control value of the light emitting section (36, 37).

**14.** The yarn travelling information acquiring method according to claim 13, **characterized in that** the normal-time control value is a value between an initial control value of the light emitting section (36, 37) and a lifetime control value relating to a lifetime of the light emitting section (36, 37).

**15.** The yarn travelling information acquiring method according to claim 13, **characterized in that** the normal-time control value is an initial control value of the light emitting section (36, 37).

**16.** The yarn travelling information acquiring method according to claim 13 or claim 14, **characterized in that** the normal-time control value is a control value at completion of cleaning of the detecting section (49; 49A).

**17.** The yarn travelling information acquiring method according to any one of claim 13 through claim 16, **characterized by** the step of updating the stored normal-time control value.

**18.** The yarn travelling information acquiring method according to any one of claim 13 through claim 16, **characterized in that** the light emitting section includes a first light emitting section (36) and a second light emitting section (37), and by the step of
determining whether or not an abnormality is generated in the detecting section (49, 49A) in accordance with a difference between the control value and the normal-time control value in the first light emitting section (36) and a difference between the control value and the normal-time control value in the second light emitting section (37).

**19.** The yarn travelling information acquiring method according to any one of claim 12 through claim 18, **characterized by** the step of determining whether or not the light emitting section (36, 37) has reached a lifetime in accordance with a difference between a present control value of the light emitting section (36, 37) and an initial control value of the light emitting section (36, 37).

**20.** The yarn travelling information acquiring method according to any one of claim 12 through claim 18, **characterized by** the step of determining whether or not the light emitting section (36, 37) has reached a lifetime in accordance with a difference between a present control value of the light emitting section (36, 37) and a lifetime control value relating to a lifetime of the light emitting section (36, 37).

**21.** The yarn travelling information acquiring method according to any one of claim 12 through claim 20, **characterized by** notifying generation of an abnormality in the detecting section (49; 49A) when determining that the abnormality is generating in the detecting section (49; 49A).

FIG. 1

# FIG. 2

## FIG. 3

EP 2 644 554 A1

CPU

| | |
|---|---|
| YARN TRAVELLING SPEED CALCULATING SECTION | 65 |
| YARN QUALITY MEASURING SECTION | 66 |
| ZERO-POINT CORRECTION PROCESSING SECTION | 67 |
| DRIVE VOLTAGE ACQUIRING SECTION | 68 |
| DETERMINING SECTION | 72 |
| UPDATE PROCESSING SECTION | 73 |

STORAGE SECTION — 86

TIMER — 87

COMMUNICATING SECTION — 88

1ST YARN UNEVENNESS DETECTING SENSOR — 43

2ND YARN UNEVENNESS DETECTING SENSOR — 44

AMPLIFICATION CIRCUIT — 91

AMPLIFICATION CIRCUIT — 92

AD2 — 46

AD / AD1 — 45

DOWNSTREAM RING BUFFER — 48

UPSTREAM RING BUFFER — 56

RAM — 55

AMPLIFICATION ADJUSTING SECTION — 81

DRIVE ADJUSTING SECTION — 82

DRIVE CIRCUIT — 84

DRIVE CIRCUIT — 83

LED — 36

LED — 37

SETTING DEVICE — 100

INSTRUCTING SECTION — 101

NOTIFICATION SECTION — 102

FIG. 4

```
        ┌─────────────────────────────┐
        │    START CONTAMINATION      │
        │   DETERMINATION PROCESSING  │
        └─────────────────────────────┘
                      │
                      ▼
        ┌─────────────────────────────┐
        │     ACQUIRE DRIVE LEVEL     │─── S1
        └─────────────────────────────┘
                      │
                      ▼
        ┌─────────────────────────────┐
        │  COMPARE NORMAL-TIME LEVEL  │
        │      AND DRIVE LEVEL        │─── S2
        └─────────────────────────────┘
                      │
                      ▼
               ╱─────────────╲  S3
              ╱  CONDITIONAL   ╲
        ╱ EQUATION OF CONTAMINATION ╲   NO
        ╲       SATISFIED?         ╱──────────┐
              ╲               ╱              │
               ╲─────────────╱               │
                     │ YES                    │
                     ▼                        │
        ┌─────────────────────────────┐      │
        │    ABNORMALITY PROCESSING   │─ S4   │
        └─────────────────────────────┘      │
                     │                        │
                     │◄───────────────────────┘
                     ▼
               ┌───────────┐
               │    END    │
               └───────────┘
```

FIG. 5A

DB

a1

DA

$D_A - D_B < a_1$

FIG. 5B

DB

b1

DA

$D_B - D_A > b_1$

FIG. 5C

DB

a2

DA

$D_A > a_2$

FIG. 5D

DB

b2

DA

$D_B > b_2$

FIG. 6

FIG. 7A

PROHIBIT MEASUREABLE

FIG. 7B

FIG. 8A

FIG. 8B

## FIG. 9A

## FIG. 9B

# FIG. 10

START LIFETIME
DETERMINATION PROCESSING

INPUT COMPLETION
OF CLEANING — S21

ZERO-POINT CORRECTION — S22

ACQUIRE DRIVE LEVEL — S23

COMPARE INITIAL LEVEL
AND DRIVE LEVEL — S24

S25
CONDITIONAL
EQUATION OF LIFETIME
SATISFIED?

YES

NO

S26
SAVE DRIVE LEVEL
AS NORMAL-TIME LEVEL

S27
NOTIFY
LIFETIME

END

FIG. 11

EP 2 644 554 A1

FIG. 12A

FIG. 12B

Europäisches
Patentamt

European
Patent Office

Office européen
des brevets

# EUROPEAN SEARCH REPORT

Application Number

EP 13 16 0315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 582 661 A (PIJLS HERMANUS STEPHANUS JOSEP) 1 June 1971 (1971-06-01) | 1,2,6, 11-13, 17,21 | INV. B65H63/06 G01B11/10 |
| Y | * column 2, lines 36-69 * <br> * column 4, lines 34-38; figure 1 * | 3-5, 7-10, 14-16, 18-20 | |
| Y | EP 2 423 144 A2 (MURATA MACHINERY LTD [JP]) 29 February 2012 (2012-02-29) <br><br> * figures 1-3 * | 3-5, 7-10, 14-16, 18-20 | |
| Y | EP 2 410 316 A1 (MURATA MACHINERY LTD [JP]) 25 January 2012 (2012-01-25) <br><br> * figure 2 * | 3-5, 7-10, 14-16, 18-20 | |

TECHNICAL FIELDS
SEARCHED (IPC)

G01B
B65H

The present search report has been drawn up for all claims

| Place of search | Date of completion of the search | Examiner |
|---|---|---|
| Munich | 20 June 2013 | Fazio, Valentina |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 13 16 0315

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2013

| Patent document cited in search report | | Publication date | Patent family member(s) | | Publication date |
|---|---|---|---|---|---|
| US 3582661 | A | 01-06-1971 | BE | 721335 A | 24-03-1969 |
| | | | CH | 497703 A | 15-10-1970 |
| | | | DE | 1798297 B1 | 03-06-1971 |
| | | | FR | 1584674 A | 26-12-1969 |
| | | | GB | 1236964 A | 23-06-1971 |
| | | | NL | 6713063 A | 27-03-1969 |
| | | | US | 3582661 A | 01-06-1971 |
| EP 2423144 | A2 | 29-02-2012 | CN | 102381590 A | 21-03-2012 |
| | | | EP | 2423144 A2 | 29-02-2012 |
| | | | JP | 2012051672 A | 15-03-2012 |
| EP 2410316 | A1 | 25-01-2012 | CN | 102346142 A | 08-02-2012 |
| | | | CN | 202256153 U | 30-05-2012 |
| | | | EP | 2410316 A1 | 25-01-2012 |
| | | | JP | 2012026877 A | 09-02-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008007214 A